Europäisches Patentamt

European Patent Office

Office européen des brevets

(11) Publication number: **0 257 490**
**A2**

(12) **— EUROPEAN PATENT APPLICATION**

(21) Application number: 87111832.9

(51) Int. Cl.⁴: **G06F 3/023**

(22) Date of filing: 14.08.87

(30) Priority: 29.08.86 DE 3629417

(43) Date of publication of application:
02.03.88 Bulletin 88/09

(84) Designated Contracting States:
AT BE CH DE FR GB IT LI LU NL SE

(71) Applicant: Kaiser, Thomas, Dr.
Gruobstrasse 3
CH-6372 Ennetmoos(CH)

(72) Inventor: Kaiser, Thomas, Dr.
Gruobstrasse 3
CH-6372 Ennetmoos(CH)

(74) Representative: von Bezold, Dieter, Dr. et al
Patentanwälte Dr. D. von Bezold, Dipl.-Ing. P.
Schütz, Dipl.-Ing. W. Heusler
Maria-Theresia-Strasse 22 Postfach 86 02 60
D-8000 München 86(DE)

(54) **Keyboard input unit for a data processing facility.**

(57) A keyboard as presented here consists of a left
and a right array of keys mechanically separated
from each other and therefore arbitrarily positionable
relative to each other. The keys are couplable to
coding units generating the code signals necessary
for the control of a data processing facility con-
nected to the keyboard. The two arrays of keys, both
essentialy of the same size, contain all the keys
necessary for the input of data into the data process-
ing facility and for the control of certain functions
including a cursor. In addition to the usual switching
device for the choice of capital and small letters and
the like, there is an additional switching device so
that a number of keys can be coupled alternatively
to three or four different coding units.

EP 0 257 490 A2

FIG.1

## Keyboard input unit for a data processing facility

This invention relates to a keyboard for entering data into a data processing facility, including a left and a right array of keys both having a number of data keys some of them having the functions of character, numeral and symbol keys, one of them being a space key and at least two of them first shift keys.

The difficulty in attaining a high speed of entering data using conventional keyboards as shown e.g. in the German technical magazine ELEKTRONIK 11 / May 30, 1986, page 18, is caused essentially by auxiliary keyboards including the function keys for moving a light point (in the following called "cursor") on a monitor or CRT screen, numeral keys ect., and being designated to be used in addition to a main keyboard essentially identical with one of the usual national standard keyboards for typewriters. Therefore a blind actuation of keys using the ten fingers is practically impossible; furthermore at least one hand has frequently to cover considerable distances.

Accordingly the object of this invention is to provide a keyboard for a data processing facility like a text editing facility and the like, capable of supporting a fast and after some training blind operation, and of being adapted easily to different working conditions and users.

This object is achieved by the invention as characterized in the patent claims and described in greater detail in the following.

This keyboard consists essentially of two arrays of keys both together including all the keys necessary for the input of data and the control of functions thus obviating any auxi liary keyboards slowing down the operation. All keys are easily accessible to a blind grip of the fingers. The extention of the arrays is limited to a minimum so that a displacement of frequently used symbols into the periferal zone of the keyboard is avoided, where it is known from experience to be particularly difficult to hit the keys reliably. One of the arrays of keys is to be operated exclusively by the left hand, the other one exclusively by the right hand. In a preferred design based on the invention, the keyboard is fully bipartite i.e. the two arrays of keys are comprised in two parts freely movable relative to each other of the keyboard, so that the relative spatial position of the arrays of keys may be such as to meet optimally the actual needs given by the arm's length as well as the positions of arms and hands of an actual user. In this connection it is e.g. possible to place a text to be copied in inclined position between the two arrays to keys in such a manner that the user can easily see the screen over the text. Furthermore it is conceivable to mount the two parts of the keyboard on top of the armrests of a comfortable chair like a deck chair, so that a user can manipulate data comfortably on a large screen or the like from such a chair.

It is very obvious that these requirements cannot be satisfied by the usual assignement of coding units to the individual keys. Rather, it is necessary to make at least some of the keys couplable to more than the two conventional coding units. In the examples described in the following of a keyboard design based on the invention, some but not all keys can be coupled arbitrarily to one of four coding units, so that the keyboard correspondingly has four levels of designation. Actuating an additional, well placed shift key can be done much faster by a trained user than locating keys in auxiliary keyboards. In the following the invention is further illustrated by two examples of varying design with reference to the drawings, in which

Figs. 1 and 2 are simplified plane views of a left and a right part of a keyboard, respectively, representing a first, preferred embodiment of the invention and

figs. 3 and 4 are simplified plane views of a left and a right part of a keyboard, respectively, representing a second embodiment of the invention.

The depicted exemplary embodiments are based on the German standard key assignment.

In the following description of the invention it is assumed that each key is combined with a contact mechanism, generating a spatial of key actuation as soon as the key is hit. After having passed a contact bounce eliminator circuit and a switching device, the signal of key actuation usually activates a coding unit selected by the switching device; when activated by the signal of key actuation, the coding unit generates a specific code signal being recognized by the connected data processing facility, and causing the input of an alphameric or other character of the control of a function of the data processing facility. In the following, for simplicity, it will be referred exclusively to the key functions controllable by the respective keys.

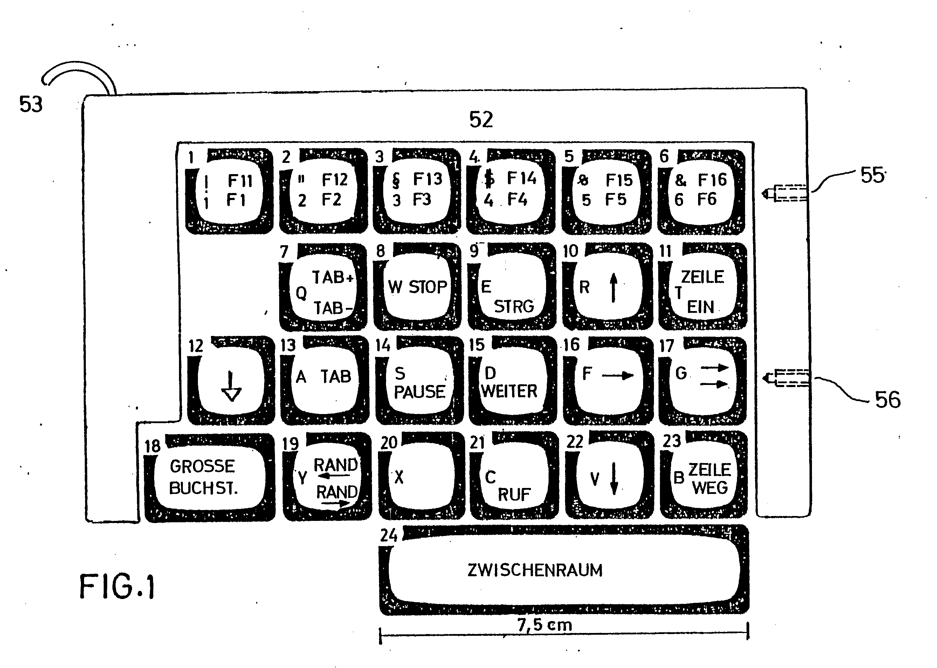

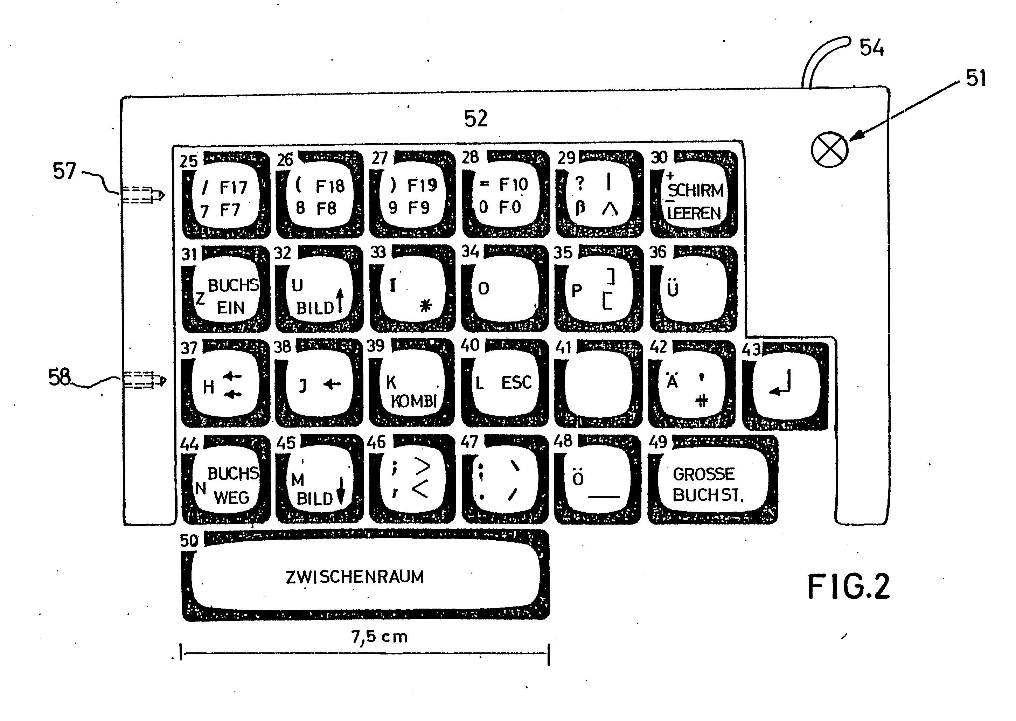

In the keyboard design according to fig. 1 and 2, the keys are arranged essentially in an orthogonal array, i.e. the keys align as well as in horizontal as well as in vertical direction.

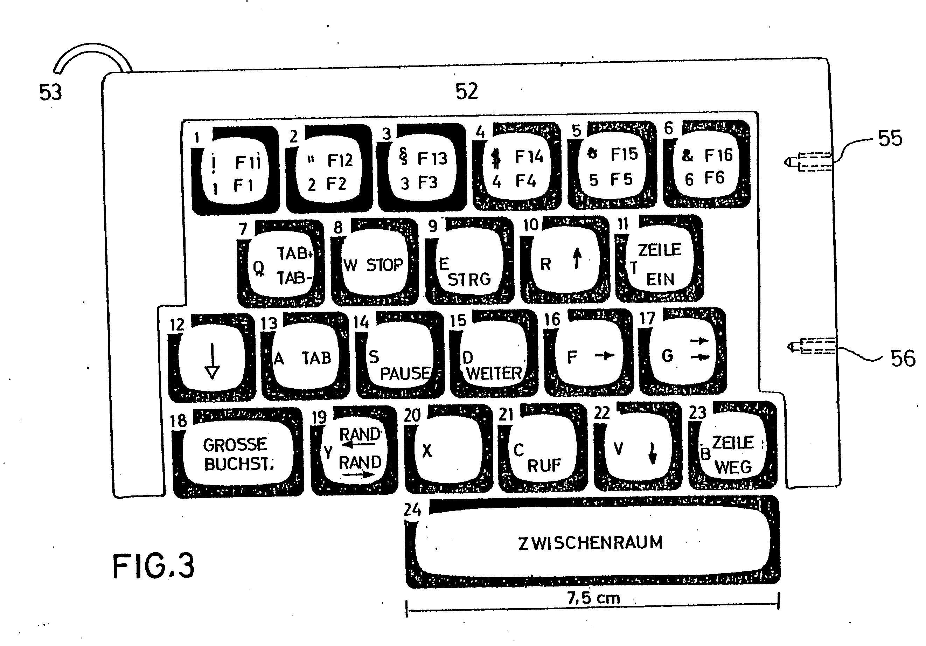

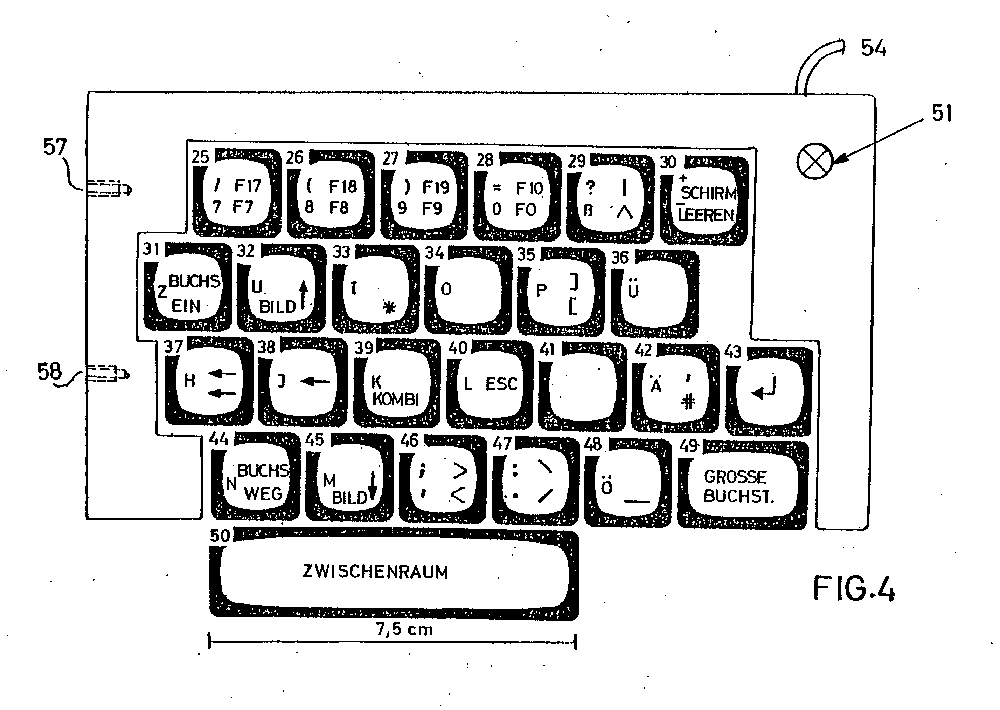

In the keyboard design according to fig. 3 and 4, the keys are staggered in adjacent horizontal rows as in the usual mechanical keyboards for typewriters having a fixed arrangement of keys.

In both cases the two parts of a keyboard are preferably movable relative to each other. In particular the two parts of a keyboard are mechanically separated so that they can be placed arbitrarily relative to each other. Because of the mutual mobility of the two parts, they may be rotated arbitrarily relative to each other which eliminates a source of obstruction of the fingers occurring in conventional typewriters. Therefore the design according to fig. 1 and 2 is preferred.

As a support for the beginner, the two parts of the keyboard are surrounded by a border along three sides, namely along the right, the left and the upper edge, the border rising e.g. 4 cm over the surface of the keys. This border is to facilitate particularly the task of locating blindly the keys of the uppermost row which are, by experience, particularly difficult keys to be hit blindly. From the edges 52 bundels 53, 54 of electrical signal and current supply lines lead to the connected data processing facility and a CRT terminal, respectively. Furthermore in the carrying frames there are threads for screws 55 to 58 enabling the left and the right part of the keyboard to be joined rigidly by means of a bridge of arbitrary shape in an arbitrary geometrical arrangement.

For facilitating the adaptation of the user to the new bipartite keyboard, one of the national standard key assignements is adopted essentially unchanged (in the examples of figs. 1 to 4 it is the German key assignement) for two operational states of the keyboard (levels of designation). These first two operational states can be set by means of each of three first shift keys 12 , 18 and 49 in a conventional way for all the data keys (characters, numerals, symbols) of both parts of the keyboard at once. In order to ensure the highest possible switching rate for setting the other two operational states (levels of designation), the slow thumb is to be excluded from being used as a possible switching tool. Therefore only the initial position of the eight other fingers is usable. In order to keep the sacrifice of the corresponding character to be moved for that purpose as small as possible, key 41 in fig. 2 and 4 (in the German keyboard the conventional ö-key) is used as a second shift key; key 41 corresponds to the initial position of the little finger of the right hand. In order to impair a reliable hitting of symbols displaced from key 41 as little as possible, the symbols are settled anew in an optimal way. In the case of the German keyboard, the character "ö" is assigned to key 48 in fig. 2 and 4, which drives the hyphen and the underlining out of their traditional places. Underlining is now provided by key 48 when actuated in the third operational state of the keyboard (third level of designation); this is to be considered a progress, as in most cases, unerlining is combined closely with cursor movements to be controlled in the third operational state of the keyboard as well. In order to facilitate the use of the hyphen during the usual typing of texts using the first and second operational state of the keyboard ( first and second level of designation) in the conventional way, the hyphen is assigned to key 30 in the first operational state; key 30 should be easily locatable by aid of the border 52 mentioned above.

There is a lamp 51 in the right part of the keyboard according of fig. 2 and 4 for indicating the second switching device beeing activated by the second shift key 41 ; when turned on, the lamp also indicates the active operational state of the second switching device. The second switching device controlled by key 41 is bistable, and its design is such that each actuation of key 41 causes a reversal of the operational state of this switching device. Key 41 is of a preferably loud, e.g. red colour and is not labeled. All the other keys are preferably of a light colour (a light gray or light beige). In order to ensure that keys 41; 18, 49, and 12 have control of both parts of the keyboard at the same time, two additional signal lines are necessary leading from the right part of the keyboard to a point of convergence of the cables of the two parts of the keyboard and from there on further to the left part of the keyboard. Accordingly, either the digital signal level 0 or 1 ( = switching signal) is held on these signal lines at any time, and indicates, if the switching device concerned is in an activated operational state or at rest.

In the figures 1 to 4 the keys are labeled according to the proper coding functions effective in the different operational states to be set by using the three first shift keys 12, 18, 49 and the second shift key 41 . The operational state of the first switching device can be reversed bistably i.e. locked using key 12 , whereas the keys 18 and 49 can only activate the second operational state as long as they are pressed down. In the first operational state of the keyboard S/U none of the switching devices is in an activated operational state (switching signal 0,0). The second operational state S/O is set by actuating of one of the first shift keys 12 , 18 or 49 , the second switching device being at rest (switching signal 1,0). The third operational state R/U is with the first switching device being at rest and the second switching device in an activated operational state (switching signal 0,1). The fourth operational state R/O is with both switching devices being in an activated operational state (switching signal 1,1). The change between both of the conventional first operational states S/U and S/O occurs as in the past, when one of the first shift keys 12 , 18 or 49 is actuated.

It is advantageous, if a keyboard still offers some empty space for including further special symbols and/or functions. Therefore, at present, not all the keys are assigned to four coding units in this keyboard. The keys 12, 24 and 43 keep the same respective coding unit in all four operational states. Other keys have coding units but in the first and second operational state. Finally there are keys which can be connected arbitrarily to one of three coding units. To sum up, it can be said that, preferably, only as many keys are connected to four different coding units as needed to support

1) a complete national standard keyboard,

2) all the additional symbols for programming e.g. in the computer language "Basic",

3) commands for the control of tabulator and row delimiter marks,

4) commands for cursor movements,

5) eight further control commands,

6) twenty programmable functions F0 to F19

An easy control of the cursor was considered to be of great importance. Therefore, in this keyboard, the movement of the cursor is controlled by keys comprised in one of the two single arrays of keys of the keyboard and particularly by keys to be actuated exclusively and comfortably by the two index fingers 10, 11, 16, 17, 22, 23, 31, 32, 37, 38, 44, 45 . Moreover, the movement of the cursor corresponds to a large extent to the movement of the tip of the index finger when actuating a key for generating a command for moving the cursor: The right index finger moves the cursor to the left, left index finger moves the cursor to the right.

In the examples of keyboards designed as shown in figs. 1 to 4 and based on the German standard key assignement, the different keys are used in the four different operational states S/U , S,O , R/U , and R/O , respectively, corresponding to the switching states 0,0; 1,0; 0,1; 1,1; respectively, and connected to the following coding units, identified by the object of the corresponding code signal and by the function controlled by the code signal, respectively:

Key 1: S/U : Numeral 1
S/O : Exclamation mark
R/U : Function key 1
R/O : Function key 11
    Key 2: S/U : Numeral 2
S/O : Quotation mark
R/U : Function key 2
R/O : Function key 12
    Key 3: S/U : Numeral 3
S/O : Paragraph
R/U : Function key 3
R/O : Function key 13

Key 4: S/U : Numeral 4
S/O : Dollar signal
R/U : Function key 4
R/O : Function key 14
    Key 5: S/U : Numeral 5
S/O : %-signal
R/U : Function key 5
R/O : Function key 15
    Key 6: S/U : Numeral 6
S/O : &-signal
R/U : Function key 6
R/O : Function key 16
    Key 7: S/U : q
S/O : Q
R/U : TAB -: Clearing a tabulator mark at the actual position of the cursor
R/O : TAB +: Setting a tabulator mark at the actual position of the cursor
    Key 8: S/U : w
S/O : W
R/U : STOP: Unconditional abort of the current program; returning control to the keyboard
R/O :
    Key 9: S/U : e
S/O : E
R/U : STRG: Control key. (Examples: Controlling difficult program interrupts, commanding to clear parts of main memory, and other system commands in combination with the subsequent actuation of a second key in level of designation 3).
R/O :
    Key 10: S/U : r
S/O : R
R/U : Arrow pointing upwards: Moving the cursor upwards by one line.
R/O :
    Key 11: S/U : t
S/O : T
R/U : ZEILE EIN: Creating space for one more line above the line of the cursor.
R/O :
    Key 12: S/U : Locking keys 18 or 49 (=Selecting capital letters and upper symbols, respectively).
S/O : Locking keys 18 or 49 (=Selecting capital letters and upper symbols, respectively).
R/U : Locking keys 18 or 49 (=Selecting capital letters and upper symbols, respectively).
R/O : Locking keys 18 or 49 (=Selecting capital letters and upper symbols, respectively).
    Key 13: S/U : a
S/O : A
R/U : TAB: Moving the cursor to the following tabulator mark.
R/O :

Key 14: S/U : s
S/O : S
R/U : PAUSE: Interrupting current program for a pause.
R/O :

Key 15: S/U : d
S/O : D
R/U : WEITER: Resuming a current program after a pause.
R/O :

Key 16: S/U : f
S/O : F
R/U : Arrow pointing to the right: Moving the cursor one step to the right.
R/O :

Key 17: S/U : g
S/O : G
R/U : Double arrow pointing to the right: Moving the cursor to the end of the line.
R/O :

Key 18: S/U : GROSSE BUCHSTABEN: Selecting capital letters and upper symbols, respectively, on keys.
S/O : GROSSE BUCHSTABEN: Selecting capital letters and upper symbols, respectively, on keys.
R/U : GROSSE BUCHSTABEN: Selecting capital letters and upper symbols, respectively, on keys.
R/O : GROSSE BUCHSTABEN: Selecting capital letters and upper symbols, respectively, on keys.

Key 19: S/U : y
S/O : Y
R/U : RAND → : Setting the right line delimiter mark at the cursor position.
R/O : ← RAND: Setting the left line delimiter mark at the cursor position.

Key 20: S/U : x
S/O : X
R/U :
R/O :

Key 21: S/U : c
S/O : C
R/U : RUF: Fetching last input command onto the CRT screen.
R/O :

Key 22: S/U : v
S/O : V
R/U : Arrow pointing downwards: Moving the cursor downwards by one line.
R/O :

Key 23: S/U : b
S/O : B
R/U : ZEILE WEG: Erasing the line of the cursor; then closing the gap of the text.
R/O :

Key 24: S/U : ZWISCHENRAUM ( = Space)
S/O : ZWISCHENRAUM ( = Space)
R/U : ZWISCHENRAUM ( = Space)
R/O : ZWISCHENRAUM ( = Space)

Key 25: S/U : Numeral 7
S/O : Division signal
R/U : Function key 7
R/O : Function key 17

Key 26: S/U : Numeral 8
S/O : (-signal
R/U : Function key 8
R/O : Function key 18

Key 27: S/U : Numeral 9
S/O : )-signal
R/U : Function key 9
R/O : Function key 19

Key 28: S/U : Numeral 0
S/O : = -signal
R/U : Function key O
R/O : Function key 10

Key 29: S/U : β
S/O : ?-signal
R/U : ^-signal
R/O : |-signal

Key 30: S/U : Hyphen (minus sign)
S/O : + -signal
R/U : SCHIRM LEEREN: Erasing the content of the CRT screen.
R/O:

Key 31: S/U : z
S/O : Z
R/U : BUCHST.EIN: Creating space for inserting a character one step to the left of the cursor position.
R/O :

Key 32: S/U : u
S/O : U
R/U : BILD ↑ : CRT screen: Moving text quickly downwards: Arrow indicating earlier parts of text getting accessible to the user.
R/O :

Key 33: S/U : i
S/O : I
R/U : Star (Multiplication sign)
R/O :

Key 34: S/U : o
S/O : O
R/U :
R/O :

Key 35: S/U : p
S/O : P
R/U : [-signal
R/O : ]-signal

Key 36: S/U : ü
S/O : Ü
R/U :
R/O :

Key 37: S/U : h
S/O : H
R/U : Double arrow pointing to the left: Moving the cursor to the left line delimiter.
R/O :

Key 38: S/U : j
S/O : J
R/U : Arrow pointing to the left: Moving the cursor to the left by one step.
R/O :

Key 39: S/U : k
S/O : K
R/U : KOMBI: Combination key: For generating rare characters and symbols (Extended ASCII), being used in combination with a subsequent actuation of one or two additional keys in R/U (may be in R/O ).
R/O :

Key 40: S/U : l
S/O : L
R/U : ESC: Escape key for generating "escape" sequences.
R/O :

Key 41: S/U : The red shift key
S/O : The red shift key
R/U : The red shift key
R/O : The red shift key

Key 42: S/U : ä
S/O : Ä
R/U : #-signal
R/O : '-signal

Key 43: S/U : "Carriage return" = Storing lines and executing command, respectively ("RETURN")
S/O : "Carriage return" = Storing lines and exexuting command, respectively ("RETURN")
R/U : "Carriage return" = Storing lines and executing command, respectively ("RETURN")
R/O : "Carriage return" = Storing lines and executing command, respectively ("RETURN")

Key 44: S/U : n
S/O : N
R/U : BUCHS.WEG: Erasing character at cursor position; then moving the cursor by one step to the left.
R/O :

Key 45: S/U : m
S/O : M
R/U : BILD   : CRT screen: Moving text quickly upwards: Arrow downwards indicating parts of the text below getting accessible to the user.
R/O :

Key 46: S/U : Comma
S/O : Semicolon
R/U : <-signal
R/O : >-signal

Key 47: S/U : Period
S/O : Colon
R/U : French ´-accent
R/O : French `-accent

Key 48: S/U : ö
S/O : Ö
R/U : Underlining
R/O :

Key 49: S/U : GROSSE BUCHSTABEN (As for key 18)
S/O : GROSSE BUCHSTABEN (As for key 18)
R/U : GROSSE BUCHSTABEN (As for key 18)
R/O : GROSSE BUCHSTABEN (As for key 18)

Key 50: S/U : ZWISCHENRAUM ( = Space)
S/O : ZWISCHENRAUM ( = Space)
R/U : ZWISCHENRAUM ( = Space)
R/O : ZWISCHENRAUM ( = Space)

As what the other national keyboards are concerned, the national standard keyboards for typewriters are realized by aid of the switching states S/U and S/O , whereas the keys in the switching states R/U and R/O are assigned essentialy to the same coding units as described for the German keyboard.

However, there are deviations resulting from the reservation of key 41 for the second switching device, from these assignements of S/U , S/O , R/U , and R/O , in several national keyboards. The proposed changes are such that the interference with the key assignement of the respective national standard keyboards for typewriters is kept minimal. These changes are described below for the following, national keyboards:

France:

1) M is moved to S/U and S/O of key 45 .
2) Question mark and comma are moved to S/O and S/U , respectively, of key 48 .
3) Plus sign is moved to S/O of key 30 .
4) Underlining is moved to R/U of key 30 .
5) Equal sign is moved to R/U of key 33 .

Great Britain:

1) Plus sign and hyphen are moved to S/O and S/U , respectively of key 30 .
2) 1/4 and 1/2 are moved to R/O and R/U , respectively, of key 30
3) Semicolon is moved to S/U of key 29 .
4) Underlining is moved to R/U of key 29 .

Italy:

1) M is moved to S/U and S/O of key 45 .
2) Question mark is moved to S/U of key 6 .
3) Underlining is moved to R/U of key 6 .
4) Comma is moved to S/U of key 46 .
5) Semicolon is moved to S/O of key 46 .
6) Apostrophe is moved to R/U of key 33 .
7) Star (multiplication sign) is moved to R/U of key 34 .

Switzerland, German and French

1) Mutated vovels of key 41 are moved to S/U and S/O of key 48 ,

2) Underlining is moved to R /U of key 48 .

3) Hyphen is moved to R/U of key 33 .

Spain:

1) Ñ is moved to S/U. and S/O of key 48 .

2) Underlinign is moved to R/U of key 48 .

3) Hypphen (minus sign) is moved to R/U of key 33 .

4) Plus sign is moved to R/U of key 34 .

5) Star (multiplication sign) is moved to R/U of key 36 .

The United States of America:

1) Colon and semicolon are moved to S/O and S/U , respectively, of key 29 .

2) Underlining is moved to R/U of key 29 .

3) Hyphen is moved to S/U of key 30 .

4) Equal sign is moved to R/U of key 33 .

In addition, these keyboards may include a repeating automatism: Either it may be activated by aid of a special repeating key to be placed in the empty space between keys 1 , 7 and 12 of fig. 1, and to be used in all four levels of designation; or a waiting automatism is used activating the repetition as soon as a key is held down longer than a certain interval of time.

The empty space over key 43 ( = "carriage return") may be used to lengthen key 43 in this direction.

The definitions of national key assignements, as used here, are from the booklet "Professional User's Guide Hard Disc System", AA-N603C-TH of the company Digital Equipment Corporation, 1984.

## Claims

1. A keyboard for feeding data into a data processing facility, including a left and a right array of keys both having a number of data keys some of them having the functions of character, numeral and symbol keys, one of them being a space key and at least two of them first shift keys, an array of contacts supporting each key with an actuatable contact mechanism generating a signal of key actuation when the corresponding key is actuated, a set of coding units providing each function of the data keys with a coding unit generating a code signal related to a certain key function for the control of the data processing facility when activated by a signal of key activation, and a first switching device being responsive to all first shift keys and being operative for coupling the contact mechanisms of the data keys of both arrays of keys alternatively to a first or a second coding unit both of which together being capable of generating code signals for the complete alphameric character set of a given national standard keybord for typewriters, said keyboard including a second shift key (41) and, controlled by this key, a second switching device for coupling at least some of the contact mechansims of data keys at least to a third respective coding unit at least some of which being capable of generating code signals for controlling functions of the data processing facility like those for a cursor control.

2. A keyboard as in claim 1 wherein said first and second switching devices are operable for coupling some of the contact mechanisms of data keys arbitrarily to one of four different coding units.

3. A keyboard as in claim 2 wherein said second switching device is bistable. whereas the first switching device is only in an active operational state as long as one of the first shift keys (12, 18, 49) is being actuated.

4. A keyboard as in claims 1, 2 or 3 wherein said two arrays of keys are movable relative to each other.

5. A keyboard as in claim 4 wherein said two arrays of keys are mechanically separated.

6. A keyboard as in one of the claims 1 to 5 wherein said arrays of keys include at least approximately the same number of keys.

7. A keyboard as in one of the preceeding claims wherein said two arrays of keys include all the keys of the keyboard.

8. A keyboard as in one of the preceeding claims wherein said two arrays of keys include a border rising over the surface of the keys, and being at least along one side, preferably along three sides of the arrays of keys.

9. A keyboard as in one of the preceeding claims wherein those of said keys (10, 16, 17, 22; 32, 37, 38, 45) couplable to coding units for generating control signals for the cursor, are along the right side of the left array of keys and along the left side of the right array of keys.

10. A keyboard as in claim 9 wherein those of said keys (16, 17) couplable to a coding unit for generating a control signal moving the cursor to the right are in the left array of keys (fig. 1 and 3) and those of said keys (37, 38) couplable to a coding unit for generating a control signal moving the cursor to the left are in the right array of keys (fig. 2 and 4).

11. A keyboard as in one of the preceeding claims based on the German standard key assignement wherein said keyboard includes at least 50 keys, whereby the left array of keys (fig. 1) includes the first twenty-four keys and the right array of keys the remaining keys (25) to (50), and said contact mechanisms of the different keys are couplable, across the switching devices controlled by the first and the second shift key, arbitrarily to said coding units generating code signals for data and functions, respectively, as given below; in this connection the following expressions in parenteses stand for:

(S/U) : both switching devices being at rest (switching signal 0,0),

(S/O) : first switching device being in an activated operational state, second switching device at rest (switching signal 1,0),

(R/U) : first switching device being at rest, second switching device in an activated operational state (switching signal 0,1),

(R/O) : both switching devices being in an activated operational state (switching signal 1,1):

Key 1: (S/U): Numeral 1
(S/O): Exclamation mark
(R/U): Function key 1
(R/O): Function key 11

Key 2: (S/U): Numeral 2
(S/O): Quotation mark
(R/U): Function key 2
(R/O): Function key 12

Key 3: (S/U): Numeral 3
(S/O): Paragraph
(R/U): Function key 3
(R/O): Function key 13

Key 4: (S/U): Numeral 4
(S/O): Dollar signal
(R/U): Function key 4
(R/O): Function key 14

Key 5: (S/U): Numeral 5 (S/O): %-signal
(R/U): Function key 5
(R/O): Function key 15

Key 6: (S/U): Numeral 6
(S/O): &-signal
(R/U): Function key 6
(R/O): Function key 16

Key 7: (S/U): q
(S/O): Q
(R/U): TAB -: Clearing a tabulator mark at the actual position of the cursor
(R/O): TAB +: Setting a tabulator mark at the actual position of the cursor

Key 8: (S/U): w
(S/O): W
(R/U): STOP: Unconditional abort of the current program; returning control to the keyboard
(R/O):

Key 9: (S/U): e
(S/O): E
(R/U): STRG: Control key. (Examples: Controlling difficult program interrupts, commanding to clear parts of main memory, and other system commands in combination with the subsequent actuation of a second key in level of designation 3).
(R/O):

Key 10: (S/U): r
(S/O): R
(R/U): Arrow pointing upwards: Moving the cursor upwards by one line.
(R/O):

Key 11: (S/U): t
(S/O): T
(R/U): ZEILE EIN: Creating space for one more line above the line of the cursor.
(R/O):

Key 12: (S/U): Locking keys 18 or 49 (= Selecting capital letters and upper symbols, respectively).
(S/O): Locking keys 18 or 49 (= Selecting capital letters and upper symbols, respectively).
(R/U): Locking keys 18 or 49 (= Selecting capital letters and upper symbols, respectively).
(R/O): Locking keys 18 or 49 (= Selecting capital letters and upper symbols, respectively).

Key 13: (S/U): a
(S/O): A
(R/U): TAB: Moving the cursor to the following tabulator mark.
(R/O):

Key 14: (S/U): s
(S/O): S
(R/U): PAUSE: Interrupting current program for a pause.
(R/O):

Key 15: (S/U): d
(S/O): D
(R/U): WEITER: Resuming a current program after a pause.
(R/O):

Key 16: (S/U): f
(S/O): F
(R/U): Arrow pointing to the right: Moving the cursor one step to the right.
(R/O):

Key 17: (S/U): g
(S/O): G
(R/U): Double arrow pointing to the right: Moving the cursor to the end of the line.
(R/O):

Key 18: (S/U): GROSSE BUCHSTABEN: Selecting capital letters and upper symbols, respectively, on keys.
(S/O): GROSSE BUCHSTABEN: Selecting capital letters and upper symbols, respectively, on keys.
(R/U): GROSSE BUCHSTABEN: Selecting capital letters and upper symbols, respectively, on keys.
(R/O): GROSSE BUCHSTABEN: Selecting capital letters and upper symbols, respectively, on keys.

Key 19: (S/U): y

(S/O): Y

(R/U): RAND → : Setting the right line delimiter mark at the cursor position.

(R/O): ← RAND: Setting the left line delimiter mark at the cursor position.

Key 20: (S/U): x

(S/O): X

(R/U):

(R/O):

Key 21: (S/U): c

(S/O): C

(R/U): RUF: Fetching last input command onto the CRT screen.

(R/O):

Key 22: (S/U): v

(S/O): V

(R/U): Arrow pointing downwards: Moving the cursor downwards by one line.

(R/O):

Key 23: (S/U): b

(S/O): B

(R/U): ZEILE WEG: Erasing the line of the cursor; then closing the gap of the text.

(R/O):

Key 24: (S/U): ZWISCHENRAUM ( = Space)

(S/O): ZWISCHENRAUM ( = Space)

(R/U): ZWISCHENRAUM ( = Space)

(R/O): ZWISCHENRAUM ( = Space)

Key 25: (S/U): Numeral 7

(S/O): Division signal

(R/U): Function key 7

(R/O): Function key 17

Key 26: (S/U): Numeral 8

(S/O): (-signal

(R/U): Function key 8

(R/O): Function key 18

Key 27: (S/U): Numeral 9

(S/O): )-signal

(R/U): Function key 9

(R/O): Function key 19

Key 28: (S/U): Numeral 0

(S/O): =-signal

(R/U): Function key 0

(R/O): Function key 10

Key 29: (S/U): ß

(S/O): ?-signal

(R/U): ^-signal

(R/O): |-signal

Key 30: (S/U): Hyphen (minus sign)

(S/O): +-signal

(R/U): SCHIRM LEEREN: Erasing the content of the CRT screen.

(R/O):

Key 31: (S/U): z

(S/O): Z

(R/U): BUCHST.EIN: Creating space for inserting a character one step to the left of the cursor position.

(R/O):

Key 32: (S/U): u

(S/O): U

(R/U): BILD ↑ : CRT screen: Moving text quickly downwards: Arrow indicating earlier parts of text getting accessible to the user.

(R/O):

Key 33: (S/U): i

(S/O): I

(R/U): Star (Multiplication sign)

(R/O):

Key 34: (S/U): o

(S/O): O

(R/U):

(R/O):

Key 35: (S/U): p

(S/O): P

(R/U): [-signal

(R/O): ]-signal

Key 36: (S/U): ü

(S/O): Ü

(R/U):

(R/O):

Key 37: (S/U): h

(S/O): H

(R/U): Double arrow pointing to the left: Moving the cursor to the left line delimiter.

(R/O):

Key 38: (S/U): j

(S/O): J

(R/U): Arrow pointing to the left: Moving the cursor to the left by one step.

(R/O):

Key 39: (S/U): k

(S/O): K

(R/U): KOMBI: Combination key: For generating rare characters and symbols (Extended ASCII), being used in combination with a subsequent actuation of one or two additional keys in (R/U) (may be in (R/O)).

(R/O):

Key 40: (S/U): l

(S/O): L

(R/U): ESC: Escape key for generating "escape" sequences.

(R/O):

Key 41: (S/U): The red shift key

(S/O): The red shift key

(R/U): The red shift key

(R/O): The red shift key

Key 42: (S/U): ä

(S/O): Ä

(R/U): #-signal

(R/O): '-signal

Key 43: (S/U): "Carriage return" = Storing lines and executing command, respectively ("RETURN")
(S/O): "Carriage return" = Storing lines and exexuting command, respectively ("RETURN")
(R/U): "Carriage return" = Storing lines and executing command, respectively ("RETURN")
(R/O): "Carriage return" = Storing lines and executing command, respectively ("RETURN")
Key 44: (S/U): n
(S/O): N
(R/U): BUCHS.WEG: Erasing character at cursor position; then moving the cursor by one step to the left.
(R/O):
Key 45: (S/U): m
(S/O): M
(R/U): BILD   : CRT screen: Moving text quickly upwards: Arrow downwards indicating parts of the text below getting accessible to the user.
(R/O):
Key 46: (S/U): Comma
(S/O): Semicolon
(R/U): <-signal
(R/O): >-signal
Key 47: (S/U): Period
(S/O): Colon
(R/U): French ´-accent
(R/O): French `-accent
Key 48: (S/U): ö
(S/O): Ö
(R/U): Underlining
(R/O):
Key 49: (S/U): GROSSE BUCHSTABEN (As for key 18)
(S/O): GROSSE BUCHSTABEN (As for key 18)
(R/U): GROSSE BUCHSTABEN (As for key 18)
(R/O): GROSSE BUCHSTABEN (As for key 18)
Key 50: (S/U): ZWISCHENRAUM ( = Space)
(S/O): ZWISCHENRAUM ( = Space)
(R/U): ZWISCHENRAUM ( = Space)
(R/O): ZWISCHENRAUM ( = Space)

12. A keyboard as in claim 11 wherein said keyboard having first two switching states (S/O) and (S/U) reserved for a national French key assignement, includes
1) M moved to (S/U) and (S/O) of key (45),
2) question mark and comma moved to (S/O) and (S/U), respectively, of key (48),
3) plus sign moved to (S/O) of key (30),
4) underlining moved to (R/U) of key (30),
5) equal sign moved to (R/U) of key (33).
13. A keyboard as in claim 11 wherein said keyboard having first two switching states (S/O) and (S/U) reserved for a national British key assignement, includes
1) plus sign and hyphen moved to (S/O) and (S/U) of key (30),

2) 1/4 and 1/2 moved to (R/O) and (R/U) of key (30),
3) semicolon moved to (S/U) of key (29),
4) underlining moved to (R/U) of key (29).
14. A keyboard as in claim 11 wherein said keyboard having first two switching states (S/O) and (S/U) reserved for a national Italian key assignement, includes
1) M moved to (S/U) and (S/O) of key (45),
2) question mark moved to (S/U) of key (6),
3) underlining moved to (R/U) of key (6),
4) comma moved to (S/U) of key (46),
5) semicolon moved to (S/O) of key (46),
6) apostrophe moved to (R/U) of key (33),
7) star (multiplication sign) moved to (R/U) of key (34).
15. A keyboard as in claim 11 wherein said keyboard having first two switching states (S/O) and (S/U) reserved for a German Swiss and French Swiss key assignement, includes
1) mutated vovels moved from key (41) to (S/U) and (S/O) of key (48),
2) underlining moved to (R/U) of key (48),
3) hyphen moved to (R/U) of key (33).
16. A keyboard as in claim 11 wherein said keyboard having first two switching states (S/O) and (S/U) reserved for a national Spanish key assignement, includes
1) Ñ moved to (S/U) and (S/O) of key (48),
2) underlining moved to (R/U) of key (48),
3) hyphen (minus sign) moved to (R/U) of key (33),
4) plus sign moved to (R/U) of key (34),
5) star (multiplication sign) moved to (R/U) of key (36).
17. A keyboard as in claim 11 wherein said keyboard having first two switching states (S/O) and (S/U) reserved for a national keyboard of The United States of America, including
1) colon and semicolon moved to (S/O) and (S/U), respectively, of key (29),
2) underlining moved to (R/U) of key (29),
3) hyphen moved to (S/U) of key (30),
4) equal sign moved to (R/U) of key (33).

FIG.1

FIG.2

0 257 490

FIG.3

FIG.4